# EUROPEAN PATENT APPLICATION

(11) **EP 4 560 033 A1**
(43) Date of publication of application: **28.05.2025**
(21) Application number: 23859721.5
(22) Date of filing: 10.05.2023
(51) Int. Cl.: C22B 1/14, C22B 1/16

(54) **IRON ORE PELLET PRODUCTION METHOD**

(30) Priority: 01.09.2022 JP 2022139568
(71) Applicant: JFE Steel Corporation, Tokyo 100-0011 (JP)
(72) Inventor: NAKAMURA, Naoto, Tokyo 100-0011 (JP); HIGUCHI, Takahide, Tokyo 100-0011 (JP); IWAMI, Yuji, Tokyo 100-0011 (JP); TAKEHARA, Kenta, Tokyo 100-0011 (JP); FUJIWARA, Shohei, Tokyo 100-0011 (JP); HORITA, Kenya, Tokyo 100-0011 (JP)
(74) Representative: Hoffmann Eitle
(86) International application number: PCT/JP2023/017633
(87) International publication number: WO 2024/047950

(57) **Abstract**

Provided is a method of producing iron ore pellets that both suppresses bursting and provides strength to the iron ore pellets. The method of producing iron ore pellets includes a water of crystallization removal process of removing water of crystallization from iron ore having an iron content of 63 mass% or less to obtain dewatered ore. In the water of crystallization removal process, the iron ore heated to a temperature of 100 °C or more and 800 °C or less is held at the temperature for a hold time of 5 min or more and 200 min or less.

## Description

### TECHNICAL FIELD

The present disclosure relates to a method of producing iron ore pellets.

### BACKGROUND

In the shaft furnace method of reduction, which is currently a mainstream direct reduction ironmaking method, lump ore or pellets are used as charged raw material. The pellets are produced through the processes of grinding, mixing, granulation, and firing of the ore. In this production process, iron ore pellets before firing (so-called green pellets) are required to have sufficient strength to suppress disintegration and breaking into powder due to handling such as transportation from the granulation process to the firing process.

It is known that controlling the particle size of the ore powder after grinding is important for controlling green pellet strength, and that the green pellet strength increases as the percentage of fines increases. Further, it is known that in the firing process, moisture in the green pellets evaporates, causing green pellets to burst or break into powder, a phenomenon known as bursting, which lowers the yield rate.

For example, JP H04-099132 A (Patent Literature (PTL) 1) describes a method of producing pellets from iron ore that contains a large amount of water of crystallization. In this production method, raw iron ore containing a large amount of water of crystallization is ground and granulated, followed by drying, dewatering, and preheating, and then a firing process is added to produce fired pellets. In this method, at least a portion of the water of crystallization in the raw iron ore is subject to dewatering processing in advance before grinding a portion or all of the raw iron ore. This production method is said to realize a decrease in bursting and an improvement in product yield rate by increasing the crushing strength of preheating pellets.

### CITATION LIST

### Patent Literature

PTL 1: JP H04-099132 A

### SUMMARY

### (Technical Problem)

Currently, high-grade ore having low water of crystallization content is commonly used as the raw ore (iron ore) for pellets. However, it is predicted that it will become more difficult to secure stable supplies of high-grade ore in the future as demand for high-grade ore increases. For this reason, the utilization of low-grade ores such as those produced in Australia, India, and other countries with iron content (total Fe content) of 63 mass% or less is being considered. As the water of crystallization in iron ore pellets (green pellets) increases, bursting is more likely to occur, as described above, and it is desirable to improve the method of producing pellets to suppress bursting.

In the pellet production method of PTL 1, it may be that unless the ore is subjected to dewatering processing at an appropriate processing temperature and for an appropriate time, it is not possible to adequately decrease the water of crystallization. However, the pellet production method of PTL 1 did not take into account such appropriate processing temperatures and times. Further, excessive water of crystallization removal processing can degrade the grindability of ore, making it difficult to control appropriate particle size in the grinding process, which may make it difficult to secure iron ore pellet strength. Therefore, it is desirable to provide a method of producing iron ore pellets that can both suppress bursting and provide strength to iron ore pellets.

It would be helpful to provide a method of producing iron ore pellets that can both suppress bursting and provide strength to iron ore pellets.

### (Solution to Problem)

The method of producing iron ore pellets according to the present disclosure is as follows.
[1] A method of producing iron ore pellets, the method comprising a water of crystallization removal process of removing water of crystallization from iron ore having an iron content of 63 mass% or less to obtain dewatered ore, wherein,
   in the water of crystallization removal process, the iron ore heated to a temperature of 100 °C or more and 800 °C or less is held at the temperature for a hold time of 5 min or more and 200 min or less.

The method of producing iron ore pellets according to the present disclosure may further be as follows.
[2] The method of producing iron ore pellets according to [1], above, further comprising a grinding process of grinding the dewatered ore to obtain ore powder, wherein
   a fraction of particles of the ore powder having a particle size of 10 µm or less as determined by sieving is 10 mass% or more and 70 mass% or less.
[3] The method of producing iron ore pellets according to [2], above, wherein the fraction of the particles having the particle size of 10 µm or less is 25 mass% or more and 60 mass% or less.
[4] The method of producing iron ore pellets according to [2] or [3], above, wherein the fraction of the particles having the particle size of 10 µm or less is 25 mass% or more and 60 mass% or less.
[5] The method of producing iron ore pellets according to any one of [1] to [4], above, wherein the water of crystallization content of the iron ore is 3.0 mass% or more.

### (Advantageous Effect)

According to the method of producing iron ore pellets of the present disclosure, it is possible to provide a method of producing iron ore pellets that can both suppress bursting and provide strength to iron ore pellets.

### BRIEF DESCRIPTION OF THE DRAWINGS

In the accompanying drawings:
FIG. 1 is a graph illustrating a relationship between green pellet strength and fraction of particles having a particle size of 10 µm or less in ore powder; and
FIG. 2 is a graph illustrating a relationship between pass-through fraction of pellet fragments of green pellets and fraction of particles having a particle size of 10 µm or less in ore powder.

### DETAILED DESCRIPTION

The following describes a method of producing iron ore pellets according to an embodiment of the present disclosure.

First, an overview of the method of producing iron ore pellets according to the present embodiment is described. The iron ore pellets according to the present embodiment are so-called green pellets (pellets before firing). The method of producing iron ore pellets according to the present embodiment includes a water of crystallization removal process in which water of crystallization is removed from iron ore having an iron content of 63 mass% or less (so-called low-grade ore) to obtain dewatered ore. In the following description, iron ore having an iron content of 63 mass% or less is simply referred to as iron ore.

In the water of crystallization removal process, the iron ore heated to a temperature of 100 °C or more and800 °C or less is held at the temperature for a hold time of 5 min or more and 200 min or less.

The method of producing iron ore pellets may further include a grinding process in which the dewatered ore is ground to obtain ore powder. In the grinding process, the ore powder is ground so that the fraction of particles having a particle size of 10 µm or less is 10 mass% or more and 70 mass% or less.

According to the method of producing iron ore pellets according to the present embodiment, it is possible to achieve both suppression of bursting and to provide strength to the iron ore pellets.

Bursting is a phenomenon where water in the iron ore pellets (green pellets) evaporates when the green pellets are heated, causing the green pellets to burst or break into powder.

The following is a detailed description of the method of producing iron ore pellets according to the present embodiment.

In addition to the water of crystallization removal process and the grinding process, the method of producing iron ore pellets according to the present embodiment may further include a granulation process of granulating the ore powder to obtain iron ore pellets (green pellets). The green pellets may then be fired in a firing process to become fired pellets. In the following description, in order to distinguish between pellets before and after firing, the iron ore pellets (pellets before firing) according to the present embodiment may be referred to as green pellets and the pellets after firing may be referred to as fired pellets. Green pellets and fired pellets may contain raw material other than iron ore (for example, bentonite).

Type and composition (ore mix) of iron ore used as raw material for green pellets are not particularly limited. The raw material for green pellets may consist of a single iron ore or a mixture of a plurality of ores in any combination.

The water of crystallization content in iron ore that is the raw material for green pellets (before the water of crystallization removal process), is not particularly limited. The water of crystallization content can be measured as the weight loss of iron ore (loss on ignition; LOI) when the iron ore is held at 1000 °C for 30 min.

The water of crystallization removal process is a process to remove water of crystallization from iron ore to obtain dewatered ore. In the water of crystallization removal process, the iron ore is heated in order to remove water of crystallization from the iron ore.

In the water of crystallization removal process, the iron ore is heated and held at a water of crystallization removal temperature of 100 °C or more and 800 °C or less. In this water of crystallization removal, the hold time for which the iron ore is held at a temperature in the above temperature range (hereinafter also referred to as water of crystallization removal time) is 5 min or more and 200 min or less. When the water of crystallization removal time is less than 5 min, the water of crystallization may not be sufficiently removed from the iron ore. When the water of crystallization removal time is more than 200 min, the grindability of the iron ore may degrade. In such cases, the green pellet strength may be decreased. Accordingly, the water of crystallization removal time is at least 5 min and not more than 200 min.

The water of crystallization removal time is preferably 180 min or less. When the water of crystallization removal time is 180 min or less, a strength decrease in the green pellets can be appropriately avoided.

In the water of crystallization removal process, the water of crystallization removal temperature and the water of crystallization removal time are important factors for the removal of water of crystallization. When the water of crystallization removal temperature is less than 100 °C, the water of crystallization cannot be sufficiently removed from the iron ore. When the water of crystallization removal temperature is more than 800 °C, the grindability of the iron ore degrades and the green pellet strength is insufficient. Accordingly, the water of crystallization removal temperature is at least 100 °C and not more than 800 °C. When the water of crystallization removal temperature is in this range and the water of crystallization removal time is 5 min or more and 200 min or less, as described above, both bursting suppression and green pellet strength can be achieved.

The water of crystallization removal temperature is preferably 200 °C or more. The water of crystallization removal temperature is preferably 500 °C or less. When the water of crystallization removal temperature is in this range, the green pellet strength can be sufficiently high. Further, bursting suppression is further improved.

The water of crystallization content of the dewatered ore is also not particularly limited. The water of crystallization content of the dewatered ore can also be measured as LOI, as in the case of the water of crystallization content of the iron ore before the water of crystallization removal process. The water of crystallization content of the dewatered ore is preferably decreased by at least 10 mass% from the water of crystallization content of the iron ore before the water of crystallization removal process.

The grinding process is a process in which dewatered ore is crushed to obtain ore powder. According to the present embodiment, the method of grinding dewatered ore and the grind time required for grinding in the grinding process are not particularly limited. When the dewatered ore is ground in batch processing, the grind time is preferably from 15 min or more and 75 min or less.

The shape of the ore powder is not particularly limited. The particle size of the ore powder is preferably such that, for example, a fraction of 95 mass% or more is 300 µm or less.

The particle size distribution of the ore powder is such that the fraction of particles having a particle size of 10 µm or less is 10 mass% or more and 70 mass% or less. The particle size or particle size distribution of the ore powder is an important factor affecting the green pellet strength. The ore powder can be obtained by grinding iron ore. The method of grinding iron ore is not particularly limited.

In the particle size distribution of the ore powder, the fraction of fines, in particular fines having a particle size of 10 µm or less, has a significant impact on the green pellet strength. In the particle size distribution of the ore powder, when the fraction of fines having a particle size of 10 µm or less is less than 10 mass%, it may not be possible to obtain green pellets having sufficient strength.

It is not clear why bursting may not be suppressed when the fraction of fines having a particle size of 10 µm or less is greater than 70 mass% in the particle size distribution of the ore powder. However, for example, the following reasons may be assumed. An excessive fraction of fines in the particle size distribution of the ore powder results in a dense green pellet structure. Therefore, there are fewer diffusion paths (channels leading from the inside of the green pellets to the outside of the pellets) for water of crystallization removal by heating during firing. This contributes to an increase in pressure inside the green pellets due to the vaporized water inside the green pellets. Therefore, when the fraction of fine powder having a particle size of 10 µm or less is more than 70 mass% in the particle size distribution of the ore powder, it may be considered that there may be cases where bursting cannot be suppressed.

In the particle size distribution of the ore powder, the fraction of fines having a particle size of 10 µm or less is preferably 20 mass% or more. In the particle size distribution of the ore powder, the fraction of fines having a particle size of 10 µm or less is preferably 60 mass% or less. This allows for appropriate green pellet strength while suppressing bursting.

The granulation process is the process of granulating ore powder to obtain iron ore pellets (green pellets). The granulation method in the granulation process is not particularly limited. In the granulation process, for example, a pelletizer may be used to granulate the ore powder. For example, a pan granulator (so-called pan pelletizer) may be used as the pelletizer.

According to the present embodiment, the shape and size (for example, particle size or average particle size ) of the iron ore pellets are not particularly limited and may be any value. The size of the green pellets may be evaluated, for example, by measuring the major axis diameter and the minor axis diameter using calipers and evaluating the average value as the particle size of the green pellets. The particle size of the green pellets is preferably 9 mm or more. The particle size of the green pellets is preferably 16 mm or less. This particle size range is typically used in this technical field.

The green pellets are then subjected to the firing process and fired to become fired pellets. The firing temperature in the firing process is, for example, from 1200 °C or more and 1350 °C or less.

In the method of producing iron ore pellets according to the present embodiment, when the water of crystallization removal temperature and the water of crystallization removal time are in the ranges described above, the pellets have the strength typically required in the technical field (for example, 1.0 kg/pellet or more). The green pellet strength is preferably 1.0 kg/pellet or more. In the method of producing iron ore pellets according to the present embodiment, further, the green pellet strength tends to be enhanced when the particle size distribution of the ore powder used as raw material has a defined distribution, that is, when the fraction of particles having a particle size of 10 µm or less is 10 mass% or more and 70 mass% or less. The green pellet strength can be measured by the method described in the EXAMPLES section below.

Further in the method of producing iron ore pellets according to the present embodiment, bursting can be suppressed when the water of crystallization removal temperature and the water of crystallization removal time are within the ranges mentioned above. In the method of producing iron ore pellets according to the present embodiment, bursting can be better suppressed when the particle size distribution of the ore powder used as raw material is the distribution defined above.

As mentioned above, bursting is a phenomenon where water in the green pellets evaporates when the green pellets are heated, causing the green pellets to burst or break into powder. The ease of bursting, or bursting tendency, can be evaluated, for example, based on the fraction of pellets of 5 mm or less that are produced after heat treatment of the green pellets at a defined temperature (for example, 300 °C) or after firing of the green pellets. In detail, when bursting occurs in the firing process or when the green pellets are heat-treated at a defined temperature (hereinafter also referred to as the firing/heating process), the green pellets burst or break into powder, producing fine pellet fragments (for example, 5 mm or smaller). Therefore, when the amount of pellet fragments generated in the firing/heating process is large, bursting is likely to occur (high bursting tendency), and this can be evaluated as not good from the viewpoint of suppressing bursting. Conversely, when the amount of pellet fragments generated in the firing/heating process is small, bursting is less likely to occur (low bursting tendency), and this can be evaluated as good from the viewpoint of suppressing bursting.

The amount of pellet fragments produced in the firing/heating process is 3.0 mass% or less. The amount of pellet fragments produced in the firing/heating process is preferably 1.5 mass% or less. The amount of pellet fragments produced in the firing/heating process is more preferably 1.0 mass% or less. These ranges can suppress a decrease in yield of the fired pellets. Therefore, when the amount of pellet fragments produced in the firing/heating process is 1.0 mass% or less, the pellets can be evaluated as good quality green pellets for which bursting is suppressed.

### EXAMPLES

The following procedure was used to produce green pellets and evaluate bursting tendency.

Ore (Ore A and Ore B) having the chemical compositions listed in Table 1 were used as the iron ore raw materials for green pellets (raw ore). The "LOI" in Table 1 indicates water of crystallization content (mass%), as described above. Further, in Table 1, "T.Fe" represents the mass% of iron content in the iron ore (total Fe content). Here, "T.Fe" is a value determined based on the total iron quantification method for iron ore specified in JIS M 8212:2022. As indicated in Table 1, Ore A and Ore B, the raw materials for the green pellets, are both iron ore having a T.Fe. of 63 mass% or less (so-called low-grade ore).

### [Table 1]

**Table 1**

| Ore | Chemical composition (mass%) | | | | | | |
|---|---|---|---|---|---|---|---|
| | T.Fe | FeO | SiO₂ | CaO | Al₂O₃ | MgO | LOI |
| Ore A | 60.8 | 0.21 | 3.99 | 0.03 | 2.22 | 0.07 | 6.8 |
| Ore B | 62.6 | 0.33 | 3.68 | 0.11 | 2.17 | 0.43 | 4.9 |

Table 2 lists information pertaining to the ore used for green pellets (ore properties) and the conditions or evaluation results of the water of crystallization removal process, the grinding process, the granulation process, and the firing process. In the following, the ores were mixed as indicated in Table 2, and the green pellets of Experiments No. 1 to 16 were obtained through the water of crystallization removal process, the grinding process, the granulation process, and the firing process described below.

### [Table 2]

**Table 2**

| No. | Ore properties | | | Water of crystallization removal process | | | Grinding process | | Granulation process | | Firing process | Remarks |
|---|---|---|---|---|---|---|---|---|---|---|---|---|
| | Ore mix (mass%) | | LOI of raw ore (mass%) | Water of crystallization removal temperature (°C) | Water of crystallization removal time (min) | LOI of dewatered ore (mass%) | Grinding time (min) | -10 µm fraction (mass%) | Green pellet particle size (mm) | Green pellet strength (kg/pellet) | -5 mm fraction (mass%) | |
| | A | B | | | | | | | | | | |
| 1 | 100 | 0 | 6.8 | 120 | 30 | 5.8 | 30 | 38 | 11.6 | 1.8 | 0.8 | Example |
| 2 | 100 | 0 | 6.8 | 250 | 30 | 2.8 | 30 | 42 | 12.1 | 1.9 | 0.4 | Example |
| 3 | 100 | 0 | 6.8 | 350 | 30 | 1.6 | 30 | 35 | 11.1 | 2.0 | 0.3 | Example |
| 4 | 100 | 0 | 6.8 | 450 | 30 | 1.2 | 30 | 32 | 12.5 | 1.8 | 0.5 | Example |
| 5 | 100 | 0 | 6.8 | 750 | 30 | 0.6 | 30 | 20 | 12.5 | 1.5 | 0.6 | Example |
| 6 | 100 | 0 | 6.8 | 80 | 30 | 6.6 | 30 | 58 | 12.2 | 1.3 | 3.1 | Comparative Example |
| 7 | 100 | 0 | 6.8 | 1000 | 30 | 0.1 | 30 | 8 | 11.4 | 0.6 | 0.8 | Comparative Example |
| 8 | 100 | 0 | 6.8 | 715 | 60 | 0.2 | 30 | 8 | 12.4 | 1.0 | 1.3 | Example |
| 9 | 0 | 100 | 4.9 | 120 | 45 | 4.2 | 30 | 80 | 12.0 | 1.1 | 1.4 | Example |
| 10 | 0 | 100 | 4.9 | 450 | 45 | 1.0 | 30 | 55 | 12.1 | 1.5 | 0.4 | Example |
| 11 | 0 | 100 | 4.9 | 300 | 10 | 4.0 | 45 | 58 | 11.1 | 1.8 | 0.8 | Example |
| 12 | 0 | 100 | 4.9 | 300 | 20 | 3.1 | 45 | 50 | 11.1 | 1.7 | 0.6 | Example |
| 13 | 0 | 100 | 4.9 | 300 | 60 | 2.0 | 45 | 29 | 11.7 | 1.6 | 0.3 | Example |
| 14 | 0 | 100 | 4.9 | 300 | 170 | 1.2 | 45 | 15 | 11.1 | 1.4 | 0.3 | Example |
| 15 | 0 | 100 | 4.9 | 300 | 2 | 4.5 | 45 | 57 | 11.7 | 1.4 | 3.2 | Comparative Example |
| 16 | 0 | 100 | 4.9 | 300 | 240 | 1.1 | 45 | 7 | 11.2 | 0.7 | 0.6 | Comparative Example |
| 17 | 25 | 75 | 5.4 | 200 | 25 | 4.1 | 60 | 48 | 11.6 | 1.7 | 0.4 | Example |
| 18 | 75 | 25 | 6.3 | 500 | 15 | 1.2 | 60 | 32 | 12.4 | 1.6 | 0.4 | Example |

Dewatered ore was obtained by water of crystallization removal applied to each raw ore mixed in the proportions of ore mixes listed in Table 2 at the water of crystallization removal temperatures and the water of crystallization removal times listed in Table 2 (dewatering process). The water of crystallization removal was carried out in air. The LOI of the dewatered ores as the water of crystallization content of the dewatered ores is listed in Table 2.

Next, the dewatered ore was ground in a ball mill for the grind times listed in Table 2 (batch processing) to obtain ore powder (grinding process). The fraction of fines having a particle size of 10 µm or less in the ore powder was then measured as the pass-through fraction (mass%) that passed through a sieve having a 10 µm mesh size. Table 2 lists the fraction of fines having a particle size of 10 µm or less in the ore powder as the "-10 µm fraction" in the grinding process.

Table 3 lists the volume-based cumulative 10 % diameter (D10), cumulative 50 % diameter (D50: median size), and cumulative 90 % diameter (D90) of the ore powder as particle size distribution. The cumulative 10 % diameter, the cumulative 50 % diameter, and the cumulative 90 % diameter were derived from the volume-based particle size distribution of the ore powder as measured using laser diffraction particle sizing (Mastersizer 3000, produced by Malvern Panalytical Ltd). The dispersant used in the measurement of particle size distribution was water. For convenient viewing, Table 3 restates the same "-10 µm fraction" as listed in Table 2.

### [Table 3]

**Table 3**

| No. | -10 µm fraction (mass%) | D10 (µm) | D50 (µm) | D90 (µm) |
|---|---|---|---|---|
| 1 | 38 | 0.9 | 22.4 | 107.1 |
| 2 | 42 | 0.9 | 15.9 | 101.1 |
| 3 | 35 | 1.0 | 35.2 | 114.0 |
| 4 | 32 | 1.1 | 39.5 | 134.6 |
| 5 | 20 | 3.8 | 59.0 | 175.4 |
| 6 | 58 | 0.8 | 7.0 | 68.8 |
| 7 | 8 | 11.1 | 80.4 | 242.6 |
| 8 | 8 | 11.2 | 77.9 | 240.3 |
| 9 | 80 | 1.0 | 2.3 | 40.1 |
| 10 | 55 | 1.2 | 7.8 | 80.1 |
| 11 | 58 | 0.7 | 7.2 | 61.7 |
| 12 | 50 | 1.0 | 10.6 | 78.4 |
| 13 | 29 | 1.4 | 48.3 | 137.8 |
| 14 | 15 | 5.5 | 70.6 | 194.4 |
| 15 | 57 | 0.9 | 7.2 | 62.5 |
| 16 | 7 | 12.5 | 87.9 | 241.5 |
| 17 | 48 | 0.8 | 11.8 | 92.5 |
| 18 | 32 | 1.2 | 38.9 | 131.0 |

Next, 1.0 mass% of bentonite was added to the ore powder to obtain a mixed powder. Bentonite was added as a binder during granulation, but is not required according to the present embodiment. The mixed powder was granulated in a pan-type granulator (pelletizer) to obtain green pellets (granulation process). During granulation, water was added to the mixed powder while rolling so that the granulated water content (amount of water added) is 10 mass% or more and 10.5 mass% or less of the weight of the green pellets. The granulated water content can be determined by measuring the weight change before and after the green pellets are held at 105 °C for 24 h. For example, when the percentage weight change after holding green pellets at 105 °C for 24 h is -10 wt%, the granulated water content is 10 %.

The particle size of the green pellets was measured using calipers to measure the diameter of the major axis and the diameter of the minor axis, and the average (arithmetic mean) was used. For each of the green pellets in each Experiment, the particle sizes of 10 pellets were measured, and the average value (arithmetic mean) was adopted as the particle size of the green pellets of that Experiment No.

The green pellet strength was measured using an autograph. The green pellet strength was measured by deforming the green pellets at a displacement rate of 1 mm/min to obtain a load-displacement curve. The load corresponding to the peak position of the first displacement in the load-displacement curve was used as the green pellet strength. For each of the green pellets in each Experiment, the strengths of 10 pellets were measured, and the average value (arithmetic mean) was adopted as the green pellet strength for that Experiment No.

Bursting tendency was evaluated by the amount of pellet fragments produced after the firing process. Specifically, bursting tendency was evaluated as follows. First, 500 g of green pellets were charged into a vertical furnace (cylindrical shape having a diameter of 60 mm), and air at 300 °C was passed from below the layer of green pellets upward at a speed of 1.0 m/s (based on 300 °C/1 atm) for 10 min. Next, the green pellets after this exposure to 300 °C air were heated to 1250 °C in an electric furnace separate from the furnace described above and fired at this temperature for 25 min (firing process). The green pellets were then removed from the furnace, sieved through a sieve having a 5 mm mesh size, and the pass-through fraction of pellet fragments that passed through the sieve (mass%) was measured to evaluate the bursting tendency. In Table 2, the pass-through fraction of pellet fragments is listed as the "-5 mm fraction".

As indicated in Table 2, the green pellets of Experiments No. 1 to 5, 8 to 14, 17, and 18, in which the water of crystallization removal temperature was 100 °C or more and 800 °C or less and the water of crystallization removal time was 5 min or more and 200 min or less, had a strength of 1.0 kg/pellet or more. Further, the green pellets in these Experiments all had a pass-through fraction of pellet fragments (-5 mm fraction), which is an index of bursting tendency, of 3.0 mass% or less, and specifically 1.5 mass% or less. That is, the green pellets of the Experiments according to the present embodiment achieved both the green pellet strength and bursting tendency.

In the production process of the green pellets in Experiments No. 1 to 5, 8 to 14, 17, and 18, in the water of crystallization removal process, the water of crystallization content of the dewatered ore (LOI of dewatered ore) was decreased by 14 mass% or more from the water of crystallization content of the iron ore (raw ore) before the water of crystallization removal process (LOI of raw ore). When compared to Experiments No. 6 and 15, where the green pellet strength and bursting tendency were not both achieved, it may be considered that the water of crystallization content of the dewatered ore is preferably decreased by at least 10 mass% from the water of crystallization content of the iron ore before the water of crystallization removal.

As indicated by the green pellets of Experiments No. 1 to 5, 8 to 14, 17, and 18, it is possible to achieve both green pellet strength and bursting tendency even when the water of crystallization content of the iron ore before the water of crystallization removal is 4.9 mass% or more. Therefore, when the water of crystallization content of iron ore before the water of crystallization removal is less than 4.9 mass%, for example, 3.0 mass% or more, it is naturally possible to achieve both green pellet strength and bursting tendency when the water of crystallization removal temperature is 100 °C or more and 800 °C or less and the water of crystallization removal time is 5 min or more and 200 min or less. In most cases, the water of crystallization content of high-grade ore conventionally used in direct reduction ironmaking is around 1.0 mass% or less. Further, iron ore pellets for blast furnaces only use iron ore having a water of crystallization content that is at most (maximum) about 3.0 mass%.

Further, among the green pellets of Experiments No. 1 to 5, 8 to 14, 17, and 18, the green pellets of Experiments No. 1 to 5, 10 to 14, 17, and 18, where the fraction of particles having a particle size of 10 µm or less (-10 µm fraction) in the ore powder was 10 mass% or more and 70 mass% or less, had a pass-through fraction of pellet fragments (-5 mm fraction), which is an index of bursting tendency, of 1.0 mass% or less, which was particularly good. Further, the green pellets of these Experiments were also better in terms of high green pellet strength than the green pellets of Experiments No. 8 and 9, where the fraction of particles having a particle size of 10 µm or less (-10 µm fraction) in the ore powder was not in the range of 10 mass% or more and 70 mass% or less.

Further, comparing the green pellets of Experiments No. 1 to 5, 10 to 14, 17, and 18 with the green pellets of Experiments No. 8 and 9, it can be seen that the green pellets tend to have higher strength when the D90 is 50 µm or more and 200 µm or less.

The green pellets in Experiments No. 6 and 7, where the water of crystallization removal temperature was not 100 °C or more and 800 °C or less, and in Experiments No. 15 and 16, where the water of crystallization time was not 5 min or more and 200 min or less, had a green pellet strength of less than 1.0 kg/pellet or a pass-through fraction of pellet fragments (-5 mm fraction) of more than 1.0 mass%. That is, the green pellets in Experiments No. 6, 7, 15, and 16 did not achieve both the green pellet strength and bursting tendency.

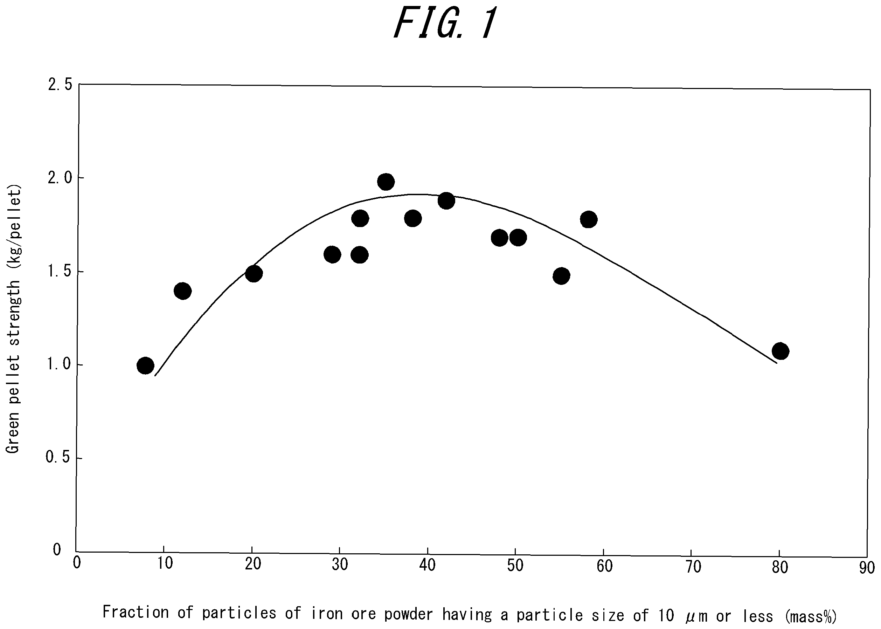

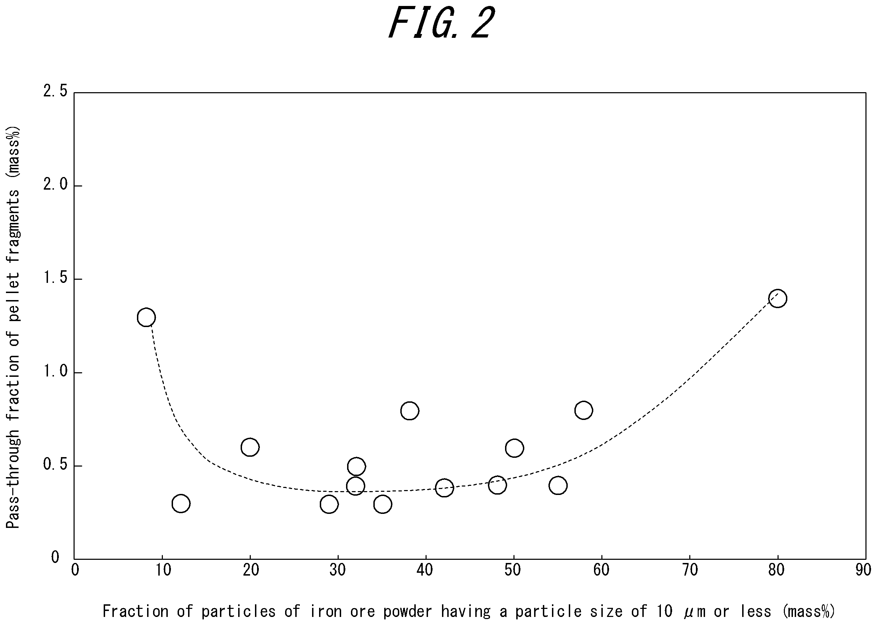

FIG. 1 illustrates a relationship between the green pellet strength and the fraction of particles having a particle size of 10 µm or less (-10 µm fraction) in the ore powder for Experiments No. 1 to 5, 8 to 14, 17, and 18. Further, FIG. 2 illustrates a relationship between the pass-through fraction of pellet fragments of green pellets (-5 mm fraction) and the fraction of particles having a particle size of 10 µm or less (-10 µm fraction) in the ore powder in Experiments No. 1 to 5, 8 to 14, 17, and 18.

The graph illustrated in FIG. 1 indicates that the green pellet strength was 1.0 kg/pellet or more when the fraction of particles having a particle size of 10 µm or less (-10 µm fraction) in the ore powder was 10 mass% or more and 70 mass% or less. In particular, when the fraction of particles having a particle size of 10 µm or less in the ore powder was 25 mass% or more and 60 mass% or less, the green pellet strength was particularly high. As indicated by the solid line in FIG. 1, as the fraction of particles having a particle size of 10 µm or less in the ore powder changes from a small fraction to a large fraction, the green pellet strength generally trends in an upward convex curve.

The graph illustrated in FIG. 2 indicates that when the fraction of particles having a particle size of 10 µm or less (-10 µm fraction) in the ore powder was 10 mass% or more and 70 mass% or less, the pass-through fraction of pellet fragments (-5 mm fraction) was 1 mass% or less. As indicated by the dashed line in FIG. 2, as the fraction of particles having a particle size of 10 µm or less in the ore powder changes from a small fraction to a large fraction, the pass-through fraction of pellet fragments generally trends in a downward convex curve.

By contrasting the graphs in FIG. 1 and FIG. 2, it can be said that, overall, when the fraction of particles having a particle size of 10 µm or less (-10 µm fraction) in the ore powder is 25 mass% or more and 60 mass% or less, the pellet strength is particularly high and the pass-through fraction of pellet fragments is also consistently low, which is particularly desirable because the bursting tendency is well suppressed.

As described above, the method of producing iron ore pellets can be provided.

The embodiments disclosed herein are merely examples, and variations as appropriate within the scope of the present disclosure may be made without being limited to the disclosed embodiments.

### INDUSTRIAL APPLICABILITY

The present disclosure is applicable to methods of producing iron ore pellets.

## Claims

1. A method of producing iron ore pellets, the method comprising a water of crystallization removal process of removing water of crystallization from iron ore having an iron content of 63 mass% or less to obtain dewatered ore, wherein,
in the water of crystallization removal process, the iron ore heated to a temperature of 100 °C or more and 800 °C or less is held at the temperature for a hold time of 5 min or more and 200 min or less.

2. The method of producing iron ore pellets according to claim 1, further comprising a grinding process of grinding the dewatered ore to obtain ore powder, wherein
a fraction of particles of the ore powder having a particle size of 10 µm or less as determined by sieving is 10 mass% or more and 70 mass% or less.

3. The method of producing iron ore pellets according to claim 2, wherein the fraction of the particles having the particle size of 10 µm or less is 25 mass% or more and 60 mass% or less.

4. The method of producing iron ore pellets according to claim 2 or 3, wherein, in a volume-based particle size distribution, the ore powder has a cumulative 90 % diameter of 50 µm or more and 200 µm or less.

5. The method of producing iron ore pellets according to any one of claims 1 to 4, wherein the water of crystallization content of the iron ore is 3.0 mass% or more.
